# EUROPEAN PATENT SPECIFICATION

(11) **EP 3 169 100 B1**
(45) Date of publication and mention of the grant of the patent: **01.09.2021**
(21) Application number: 16202847.6
(22) Date of filing: 08.07.2013
(51) Int. Cl.: H04B 7/26, H04W 76/28

(54) **METHOD AND APPARATUS FOR DETERMINING TDD UL-DL CONFIGURATION APPLICABLE FOR RADIO FRAMES**
VERFAHREN UND VORRICHTUNG ZUR BESTIMMUNG EINER TDD-UL-DL-KONFIGURATION FÜR FUNKRAHMEN
PROCÉDÉ ET APPAREIL PERMETTANT DE DÉTERMINER LA CONFIGURATION UL-DL TDD APPLICABLE POUR DES TRAMES RADIO

(30) Priority: 06.07.2012 IN 2749CH2012
(43) Date of publication of application: 17.05.2017
(62) Divisional of application: 13813493.7
(73) Proprietor: Samsung Electronics Co., Ltd., Gyeonggi-do 16677 (KR)
(72) Inventor: INGALE, Mangesh Abhimanyu, 560066 Bangalore (IN); BAGHEL, Sudhir Kumar, 560037 Bangalore (IN); KIM, Soeng-Hun, 443-851 Gyeonggi-do (KR)
(74) Representative: HGF

(56) References cited:
- EP-A2- 2 306 661
- US-A1- 2009 259 909
- US-A1- 2010 110 897
- US-A1- 2011 038 275
- US-A1- 2011 273 996
- US-A1- 2012 078 933

## Description

### Technical Field

The present invention relates to the field of wireless communication systems, and more particularly relates to determining TDD configurations applicable for radio frames.

### Background Art

In wireless communication systems, such as defined by Third Generation Partnership Project (3GPP) Long Term Evolution (LTE/LTE-A) specification, user equipments (UEs) and base station (i.e.,eNodeB (eNB)) communicate with each other by sending and receiving data carried in radio signals according to a predefined radio frame format. Typically, the radio frame format contains a sequence of radio frames, each radio frame having a plurality of sub frames. Typically, each radio frame is of 10 milliseconds (ms) duration and consisting of two half frames each of 5ms duration. Each half frame consists of 5 sub frames of 1ms duration. Each sub frame consists of two slots of 0.5ms duration; each slot consists of a plurality of Orthogonal Frequency Division Multiplexing (OFDM) symbols.

Typically, subframes in a radio frame are configured to perform uplink (UL) transmission and downlink (DL) reception in different duplexing methods. For example, Time Division Duplex (TDD) mode is a duplexing method to separate transmitting and receiving radio signals in the time domain such that the same carrier frequency is used for transmission and reception. LTE release 8 specification (TS 36.300) specifies seven different TDD configurations to support different DL/UL traffic ratios for different frequency bands when TDD mode is employed to perform UL transmission and DL reception. In each TDD configuration, each subframe (SF) of a radio frame is defined as uplink subframe (U), downlink subframe (D) or special subframe (S). For example, seven TDD configurations are illustrated in Table 1 below:

### Table 1

**[Table 1]**

| **Configuration** | **Switch-point periodicity** | **Subframe number** | | | | | | | | | |
|---|---|---|---|---|---|---|---|---|---|---|---|
| | | **0** | **1** | **2** | **3** | **4** | **5** | **6** | **7** | **8** | **9** |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

During uplink subframe, UE operates in a transmission mode while eNB operates in a reception mode. During downlink subframe, the UE operates in a reception mode while the eNB operates in a transmission mode. During special subframe, the eNB switches from transmission mode to reception mode and the UE switches from reception mode to transmission mode.

At any given instance, any of above seven TDD configurations may be configured for a serving cell. In Long Term Evolution (LTE)Release 12 specification, dynamic TDD reconfiguration on a cell level is envisioned by adapting TDD configuration according to prevailing traffic load situation in UL and DL for a concerned cell. The dynamic TDD reconfiguration of TDD configuration on a cell level allows optimum utilization of radio resources matching traffic data volume in UL and DL direction.

In Release 11, 3GPP Radio Access Network (RAN) Working Group 1 evaluated performance of dynamic TDD reconfiguration on time scale of 10ms (fast), 200ms (medium) and 640ms (slow) in TR 36.828. The fast adaptation rate of 10ms reconfigures TDD configuration on a radio frame basis. The slow adaptation rate of 640ms reconfigures TDD configuration according to minimum system information (SI) change modification period. For faster reconfiguration, acurrently applicable TDD configuration is notified to a UE through physical layer signalling via a new Downlink Control Information (DCI) format. The new DCI format consists of code points to index some or all seven TDD configurations. Typically, a DCI format indicating new TDD configuration is transmitted on a Packet Data Control Channel (PDCCH), where UE use System Information Radio Network Temporary Identifier (SI-RNTI) to decode the DCI format in the common search space of PDCCH.

In a radio frame, subframes SF#0 and SF#5 are fixed as DL subframes, SF#1 is fixed as special subframe and SF#2 is fixed as UL subframe. For 5ms switching periodicity configurations, subframe SF#6 is fixed as DL subframe while subframe SF#7 is fixed as UL subframe. Hence, subframes SF#3, SF#4, SF#8 and SF#9 are subframes available for flexible reconfiguration as DL or UL.

According to LTE Release 8 specification (TS 36.300), in order to enable reasonable battery power consumption at UE, a discontinuous reception (DRX) cycle is employed per UE in connected state. Discontinuous reception allows UE to turn off its radio transceiver during various periods in order to save battery life on the UE. When DRX cycle is configured for a UE, the UE switches between on duration (also termed as period of activity) and off duration (also termed as period of inactivity). During the on duration period, the UE monitors one or more subframes of a radio frame. Upon expiry of the on duration period, the UE switches to sleep mode during the off duration period to conserve battery consumption.

US 2011/0273996 A1 discloses a wireless apparatus for a multi-carrier system, the wireless apparatus comprising: a control channel unit which monitors a control channel transmitted via at least one carrier from among a plurality of carriers; and a data channel unit which transmits or receives data packets to or from a data channel using the resource allocation received from the control channel. The control channel unit monitors the control channel in a plurality of search space in a subframe.

US 2011/0038275 A1 discloses a method for monitoring a control channel in a wireless communication system.

EP 2306661 A2 discloses a relay station in a radio communication system and a method for operating a relay station in a wireless communication system.

US 2012/0078933 A1 discloses a method and a device for monitoring the control channel in a multicarrier system.

US 2009/0259909 A1 discloses systems and methodologies that facilitate signaling Physical Hybrid Automatic Repeat Request (HARQ) Indicator Channel (PHICH) resource assignments in a wireless communication environment. At least a portion of a current PHICH resource assignment for a current Transmission Time Interval (TTI) and at least a portion of a subsequent PHICH resource assignment for a subsequent TTI can be encoded within a common encoded signal. Further, the common encoded signal can be sent to an access terminal during the current TTI. For instance, the common encoded signal can be transmitted via a Physical Broadcast Channel (PBCH). Alternatively, the common encoded signal can be sent through dedicated Radio Resource Control (RRC) signaling during handover.; The access terminal can decode the common encoded signal received from the base station to identify the current PHICH resource assignment (or portion thereof) and the subsequent PHICH resource assignment (or portion thereof).

US 2010/0110897 A1 discloses a method for discontinuously monitoring downlink control channel in a user equipment in a wireless communication system which includes receiving a discontinuous reception (DRX) Start Offset from a base station to be used for both a first DRX Cycle and a second DRX Cycle, and starting an On Duration Timer at a subframe that satisfies either a first condition for the first DRX Cycle or a second condition for the second DRX Cycle, wherein a first DRX offset used in the first condition is based upon the DRX Start Offset received from the base station, and wherein a second DRX offset used in the second condition is based upon a remainder of the DRX Start Offset received from the base station after a modulo operation by the second DRX Cycle.

US 5809421 A discloses a method for locating variable control channels by a mobile station in a radiotelephone system that permits the mobile station to quickly find the location of unknown control channels. A locator beacon is transmitted on one or more common locator channels from each base station or from a locator transmitter which covers the entire region. The locator beacon includes control channel location information which defines the location in the spectrum of a designated control channel. A mobile station, including a roaming mobile station outside its home service area, tunes to the locator channel and detects the locator beacon to read the control channel location information. In response, the mobile station tunes to the frequency of the designated control channel to receive a control signal from the base station. To prevent co-channel interference, the base stations of a radiotelephone system time division duplex the broadcast of respective locator beacons.

WO 01/33888 A1 discloses a method for use in a wireless telecommunications system for performing a control channel selection procedure. The method includes steps of (a) invoking the control channel selection procedure; if the mobile station has left a packet data mode to set up a circuit call, (b) executing a digital control channel service determination procedure; and if the digital control channel service determination procedure returns a first failure indication, indicating that it was unable to select either a digital control channel or a packet control channel, (c) exiting the control channel selection procedure with a second failure indication set. The digital control channel service determination procedure sets the first failure condition if a candidate digital control channel is determined to be barred, and no other candidate digital control channels are indicated as being potentially available, and the mobile station is unable to receive a message (Beacon PCCH Parameters) that provides information regarding a packet control channel.

### Disclosure of Invention

### Technical Problem

When eNB adapts dynamic TDD reconfiguration to match traffic load situation, TDD UL-DL configuration may need to be reconfigured for each radio frame. As mentioned above, the eNB transmits a new DCI format indicating the current TDD UL-DL configuration to the UE on subframes SF#0 and SF#5 in each radio frame so that the UE knows the TDD UL-DL configuration for said each radio frame. However, the UE may be operating in an off duration of the configured DRX cycle when the eNB transmitted a new DCI format indicating the current TDD UL-DL configuration applicable for the current radio frame in the subframes SF#0 and SF#5 of the current radio frame. As a consequence, the UE may not be aware of correct TDD UL-DL configuration applicable for the current radio frame, causing the UE to go out of synchronization with the eNB.

### Solution to Problem

The invention is defined by the independent claims. Further aspects of the invention are outlined in the dependent claims. When the term "embodiment" is used for describing unclaimed combinations of features, the term has to be understood as referring to examples useful for understanding the present invention.

Also disclosed is a method and an apparatus for determining Time Division Duplex (TDD) Uplink (UL)-Downlink (DL) configuration applicable for a radio frame. In one embodiment, an eNodeB (eNB) communicates with associated user equipment(s) that a dynamic configuration is enabled for a serving cell associated with the eNB and signals a set of TDD UL-DL configurations to the user equipment(s). Further, the eNB communicates a TDD UL-DL configuration applicable for radio frame(s) from the set of TDD UL-DL configurations to respective user equipment(s). The respective user equipment(s) monitors PDCCH subframe and handles DRX timers according to pre-defined actions governed by a set of rules upon transitioning from a period of inactivity to a period of activity of a DRX cycle when different TDD UL-DL configurations are dynamically changed on a cell level.

In a first disclosure, a method comprises: detecting transition from a period of inactivity to a period of activity of a configured Discontinuous Reception (DRX) cycle; and determining category of at least one subframe of a radio frame likely to be encountered during the period of activity, when dynamic reconfiguration of Time Division Duplex (TDD) Uplink (UL) - Downlink (DL) configurations is enabled, wherein the category of subframe of the radio frame comprises one of a flexible subframe and a fixed subframe.

In a second disclosure, the method of the first disclosure further comprises: receiving, from a serving cell, a dynamic reconfiguration indicator indicating that the dynamic reconfiguration of TDD UL-DL configurations is enabled for the serving cell; and receiving a TDD reconfiguration set bitmap indicating a set of TDD UL-DL configurations selected from a plurality of pre-defined TDD UL-DL configurations when the dynamic reconfiguration of TDD UL-DL configurations is enabled, wherein the TDD reconfiguration set bitmap is received in one of system information broadcast message and dedicated Radio Resource Connection (RRC) signaling message.

In a third disclosure, the method of the second disclosure wherein the TDD reconfiguration set bitmap is indexed to the plurality of pre-defined TDD UL-DL configurations, and the TDD reconfiguration set bitmap comprises bits 0 and 1, where bit '1' indicates an indexed TDD UL-DL configuration belongs to the indicated set of TDD UL-DL configurations and bit '0' indicates an indexed TDD UL-DL configuration belongs to the indicated set of TDD UL-DL configurations.

In a fourth disclosure, the method of the second disclosure further comprises:
performing intersection operation on corresponding subframes across the indicated set of TDD UL-DL configurations for each subframe type; determining whether subframe type obtained after intersection operation is same as subframe type of the corresponding subframes across the indicated set of TDD UL-DL configurations; if so, identifying subframe category as fixed subframe, wherein subframe type associated with the fixed subframe comprises one of downlink subframe type, special subframe type and uplink subframe type; and if not, identifying subframe category as flexible subframe, wherein the flexible subframe is an ambiguous subframe type.

In a fifth disclosure, the method of the fourth disclosure further comprises:
determining whether the subframe type associated with the fixed subframe is one of the downlink subframe type and the special subframe type; identifying the fixed subframe as a PDCCH subframe if the fixed subframe is one of the downlink subframe type and special subframe type; monitoring PDCCH during the subframe encountered upon waking up from the period of inactivity of the configured DRX cycle if the encountered subframe is a fixed subframe identified as PDCCH subframe; counting the fixed subframe towards at least one of on duration timer, DRX inactivity timer and DRX retransmission timer during the period of activity of the configured DRX cycle;
determining whether a TDD UL-DL configuration applicable for one or more radio frames is received from the serving cell during the encountered subframe; if so, applying the TDD UL-DL configuration for at least one of the one or more radio frames; and if no, determining category of next subframe likely to be encountered during the period of activity of the configured DRX cycle.

In a sixth disclosure, the method of the fourth disclosure further comprises:
extending the period of activity of the configured DRX cycle based on the one or more flexible subframes encountered during the period of activity, and wherein the fixed subframe identified as PDCCH subframe corresponds to first subframe and sixth subframe of the radio frame in which reception of a TDD UL-DL configuration applicable for one or more radio frames is expected.

In a seventh disclosure, the method of the fourth disclosure further comprises performing a pre-defined action based on one of a pre-defined set of rules upon waking up from the period of inactivity of the configured DRX cycle if the subframe encountered upon waking up from the period of inactivity is flexible subframe.

In an eighth disclosure, the method of the seventh disclosure wherein performing the pre-defined action based on a first rule upon waking up from the period of inactivity comprises: determining whether the flexible subframe encountered upon waking up from the period of inactivity of the configured DRX cycle is identified as PDCCH subframe according to an union operation performed on corresponding subframes across the indicated set of TDD UL-DL configurations for each subframe type; monitoring PDCCH during the flexible subframe if the flexible subframe is identified as PDCCH subframe according to the union operation; counting the flexible subframe towards at least one of on duration timer, DRX inactivity timer and DRX retransmission timer during the period of activity of the configured DRX cycle; determining whether a TDD UL-DL configuration applicable for one or more radio frames is received from the serving cell during the flexible subframe identified as PDCCH subframe; if so, applying the TDD UL-DL configuration for at least one of the one or more radio frames; and if not, determining category of next subframe likely to be encountered during the period of activity of the configured DRX cycle, and wherein determining whether the flexible subframe encountered upon waking up from the period of inactivity of the configured DRX cycle is identified as PDCCH subframe according to the union operation performed on the corresponding subframes across the indicated set of TDD UL-DL configurations for said each subframe type comprises: performing union operation on said corresponding subframes across the indicated set of TDD UL-DL configurations for said each subframe type; determining whether at least one subframe type of the corresponding subframes is one of downlink subframe type and special subframe type; and identifying one or more flexible subframes as PDCCH subframe if the at least one subframe type of corresponding subframes in the indicated set of TDD UL-DL configurations is one of downlink subframe type and special subframe type.

In a ninth disclosure, the method of the seventh disclosure wherein performing the pre-defined action based on a second rule upon waking up from the period of inactivity comprises: skipping monitoring of PDCCH during the encountered subframe if the category of subframe encountered upon waking up from the period of inactivity is the flexible subframe; counting the flexible subframe towards at least one of on duration timer, DRX inactivity timer and DRX retransmission timer during the period of activity of the configured DRX cycle; and determining category of next subframe likely to be encountered during the period of activity of the configured DRX cycle, or skipping monitoring of PDCCH during the encountered subframe if the category of subframe encountered upon waking up from the period of inactivity is the flexible subframe; skipping counting the flexible subframe towards at least one of on duration timer, DRX inactivity timer and DRX retransmission timer during the period of activity of the configured DRX cycle; and determining category of next subframe likely to be encountered during the period of activity of the configured DRX cycle, or determining a primary TDD UL-DL configuration indicated through one of system information block (SIB) message and dedicated radio resource control (RRC) signaling message; identifying the flexible subframe encountered upon waking up from the period of inactivity of the configured DRX cycle as a PDCCH subframe if corresponding subframe of a primary TDD UL-DL configuration is one of downlink subframe and special subframe; monitoring PDCCH during the flexible subframe; counting the flexible subframe towards at least one of on duration timer, DRX inactivity timer and DRX retransmission timer during the period of activity of the configured DRX cycle; determining whether a TDD UL-DL configuration applicable for one or more radio frames is received from the serving cell during the flexible subframe identified as PDCCH subframe; if so, applying the TDD UL-DL configuration for at least one of the one or more radio frames; and if not, determining category of next subframe likely to be encountered during the period of activity of the configured DRX cycle.

In a tenth disclosure, the method of the fourth disclosure further comprises performing one of radio resource management (RRM) measurements, radio link monitoring (RLM) measurements and channel state information (CSI) measurements during the fixed subframe encountered during the period of activity of the configured DRX cycle, wherein the fixed subframe is identified as PDCCH subframe.

In an eleventh disclosure, the method of the first disclosure further comprises receiving a signaling message indicating at least one of TDD UL-DL configuration applicable for one or more radio frames, validity information associated with the TDD UL-DL configuration, and a system frame number (SFN) information, wherein the validity information indicates duration for which the indicated TDD UL-DL configuration is valid, wherein the SFN information indicates a system frame number at which the indicated TDD UL-DL configuration is to be applied, and wherein the signaling message is one of a new Downlink Control Information (DCI) format message, a TDD configuration Medium Access Control (MAC) Control Element message and a Radio Resource Connection (RRC) message.

In a twelfth disclosure, the method of the first disclosure further comprises receiving, from a serving cell, a dynamic reconfiguration indicator indicating that the dynamic reconfiguration of TDD UL-DL configurations is enabled for the serving cell; and receiving a validity information associated with the dynamic reconfiguration indicator indicating duration for which dynamic reconfiguration of TDD UL-DL configuration is enabled, wherein the dynamic reconfiguration indicator is received in one of system information broadcast message and dedicated RRC signaling message.

In a thirteenth disclosure, the method of the second disclosure further comprises receiving a validity information associated with the TDD reconfiguration set bitmap indicating duration for which the set of TDD UL-DL configurations indicated in the TDD reconfiguration set bitmap are valid.

In a fourteenth disclosure, the method of the first disclosure further comprises:
receiving a handover command message with a dynamic reconfiguration indicator indicating that dynamic reconfiguration of TDD UL-DL configurations is enabled for a target cell, or receiving a handover command message with a cluster indicator indicating whether a target cell belong to same cluster as of the serving cell or not, or
deferring transmission of data in the flexible subframe following a measurement gap if the measurement gap is preceded by one of a downlink subframe and special subframe,
or deferring transmission of data in the flexible subframe following a measurement gap if the measurement gap is preceded by another flexible subframe.

In a fifteenth disclosure, there is provided an apparatus arranged to perform the method described in the first to fourteenth disclosures.

### Brief Description of Drawings

Figure 1 is a schematic diagram depicting an exemplary wireless network environment, according to one embodiment.
Figure 2 is a process flowchart illustrating an exemplary method of indicating a Time Division Duplex (TDD) Uplink (UL)-Downlink (DL) configuration applicable for a radio frame, according to one embodiment.
Figures 3a and 3b are a process flowchart illustrating an exemplary method of determining TDD UL-DL configuration for a current radio frame upon waking up from a period of inactivity of a configured Discontinuous Reception (DRX) cycle, according to one embodiment.
Figure 4 is a schematic representation illustrating a process of monitoring PhysicalDownlink Control Channel (PDCCH) and counting DRX timers.
Figure 5 is a schematic representation illustrating another process of monitoring PDCCH and counting DRX timers.
Figure 6 is a schematic representation illustrating extending on duration timer of a DRX cycle to determine TDD UL-DL configuration applicable for a current radio frame.
Figure 7 is a schematic representation illustrating extending on duration timer of a DRX cycle to determine TDD UL-DL configuration applicable for a next radio frame.
Figures 8a to 8e illustrate schematic representations of TDD Configuration Medium Access Control (MAC) Control Element (CE) formats carrying TDD UL-DL configuration applicable for a current radio frame and/or subsequent radio frame, according to one embodiment.
Figure 9 is a block diagram of an exemplary user equipment, such as those shown in Figure 1, showing various components for implementing embodiments of the present subject matter.

The drawings described herein are for illustration purposes only and are not intended to limit the scope of the present disclosure in any way.

### Best Mode for Carrying out the Invention

In the following detailed description of the embodiments of the invention, reference is made to the accompanying drawings that form a part hereof, and in which are shown by way of illustration specific embodiments in which the invention may be practiced. These embodiments are described in sufficient detail to enable those skilled in the art to practice the invention, and it is to be understood that other embodiments may be utilized and that changes may be made without departing from the scope of the present invention. The following detailed description is, therefore, not to be taken in a limiting sense, and the scope of the present invention is defined only by the appended claims.

The present invention discloses a method for identifying fixed subframes and flexible subframes during on duration period of a configured Discontinuous Reception (DRX) cycle when different Time Division Duplex (TDD) Uplink (UL)-Downlink (DL) configurations from predefined TDD UL-DL configurations are dynamically changed on a cell level in a wireless network environment. Further, the present invention discloses a method for monitoring Physical Downlink Control Channel (PDCCH) subframe and handling Discontinuous Reception (DRX) timers during the on duration period of a configured DRX cycle based on identified category (e.g., flexible or fixed) of subframes. Further, the present invention discloses a method for determining current TDD UL-DL configuration applicable for a radio frame(s) from a set of TDD UL-DL configurations.

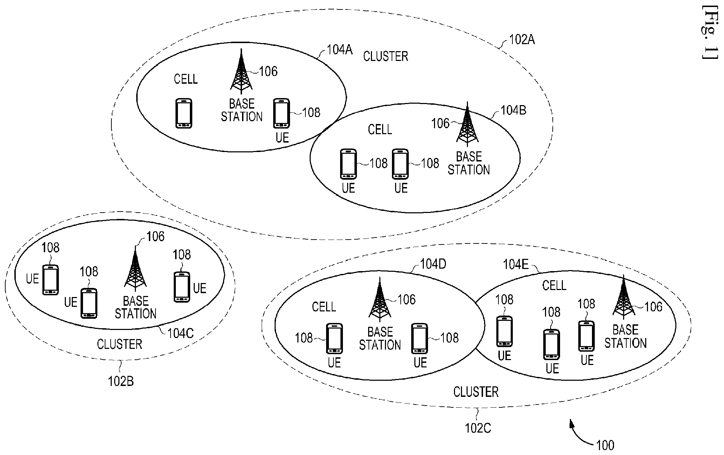

Figure 1 is a schematic diagram depicting an exemplary wireless network environment 100, according to one embodiment. In Figure 1, the wireless network environment 100 includes clusters 102A-102C formed of one or more cells. The cluster 102A includes cell 104A and cell 104B. The cluster 102B includes cell 104C. The cluster 102C includes cell 104D and cell 104E. Each of the cells 104A to 104E includes a base station 106 (e.g., eNodeB (eNB)) and one or more user equipments (UEs) 108.

Each eNB 106 is configured for transmitting a dynamic reconfiguration indicator indicating to the user equipment(s) 108 that a dynamic configuration is enabled for a serving cell associated with the respective eNB 106. Also, the eNB 106 is configured for signaling a TDD reconfiguration set bitmap indicating a set of TDD UL-DL configurations applicable during the dynamic reconfiguration to the user equipment(s) 108. Further, the eNB 106 is configured for signaling a TDD UL-DL configuration applicable for a radio frame(s) from the set of TDD UL-DL configurations when dynamic reconfiguration is enabled for the eNB 106. For example, when the dynamic reconfiguration is enabled, the eNB 106 transmits a new Downlink Control Information (DCI) format indicating TDD UL-DL configuration applicable for a radio through physical layer signaling in subframe #0 (SF#0) and subframe #5 (SF#5) of the radio frame.

The respective user equipment(s) 108 is configured for monitoring PDCCH subframe and handling DRX timers upon transitioning from a period of inactivity to a period of activity of a DRX cycle when different TDD UL-DL configurations from a set of TDD UL-DL configuration is dynamically changed on a cell level. When the user equipment(s) 108 receives the TDD UL-DL configuration applicable for the radio frame during monitoring PDCCH, the user equipment(s) 108 applies the TDD UL-DL configuration for the radio frame. Also, based on the TDD UL-DL configuration applicable for the radio frame, the user equipment(s) 108 derives Hybrid Automatic Repeat Request (HARQ) timings for Physical Downlink Shared Channel (PDSCH) and Physical Uplink Shared Channel (PUSCH) retransmissions and ACK/NACK respectively.

When the user equipment(s) 108 misses to receives a new DCI format and receives a downlink assignment message or UL grant message during monitoring of PDCCH in a period of activity, the user equipment(s) 108 performs autonomous denial of ACK/NACK or UL transmission as the user equipment(s) 108 is not aware of TDD UL-DL configuration applicable for current radio frame. When the eNB 106 determines that the user equipment(s) 108 has not sent the ACK/NACK or UL transmission in response to the DL assignment message or the UL grant message, the eNB 106 understand that the user equipment(s) 108 has missed to receive the new DCI format indicating TDD UL-DL configuration applicable for the current radio frame. Accordingly, the eNB 106 signals the TDD UL-DL configuration during a next DL subframe of a current radio frame where the user equipment(s) 108 is monitoring PDCCH via a new Downlink Control information (DCI) format message, TDD Configuration Medium Access Control (MAC)Control Element (CE)message or Radio Resource Control (RRC) message.

During mobility of the user equipment 108, a serving cell (e.g., the cell 104A) belonging to a particular cluster (e.g., the cluster 102A) sends a handover command, containing a dynamic reconfiguration indicator indicating dynamic reconfiguration is enabled for a target cell (e.g., the cell 104C) belonging to another cluster (e.g., the cluster 102B), to the user equipment 108. Additionally, in the handover command, the serving cell 104A may send a cluster indicator indicating TDD UL-DL configuration applicable to the cluster to which the target cell belongs. If the target cell belongs to the same cluster as the serving cell, then the cluster indicator in the handover command is set to value '0' which means TDD UL-DL configuration for the serving cell and the target cell is same.

When the cell 1 04A belonging to the cluster 102A leaves the cluster 102A and joins another cluster (e.g., cluster 102B), the cell 104A discards the set of TDD UL-DL configuration applicable to the cluster 102A and uses the set of TDD UL-DL configurations applicable to the cluster 104B. If the cell 104A forms a new cluster, the cell 104A determines the set of TDD UL-DL configurations applicable to the new cluster. When the cell 104A leaves one cluster and joins another cluster or forms a new cluster, the cell 104Ainforms to neighboring cells 104B-E through X2 interface. Further, interference avoidance can be accomplished through frequency domain co-ordination of overlapped UL-DL subframe of adjacent cells through X2 interface. Frequency domain co-ordination is applicable on cluster level or cell level. For example, if the cell 104Aof the cluster 102A uses upper frequency partition as UL subframe while the cell 104Cof the cluster 102B uses lower frequency partition as DL subframe in the overlapped UL-DL subframe of their respective TDD UL-DL configuration. In some embodiments, adjacent cells having dynamic reconfiguration of TDD UL-DL configuration can co-ordinate the overlapped UL-DL subframe of their respective TDD UL-DL configuration in frequency domain applying subframe partitioning such that one cell 104A uses one partition as DL subframe while the other cell 104B uses the other partition as UL subframe avoiding the overlap.

LTE specification TS 36.133 specifies the following rule: "For E-UTRAN TDD, the UE do not transmit in the uplink subframe occurring immediately after the measurement gap if the subframe occurring immediately before the measurement gap is a downlink subframe". In the context of dynamic reconfiguration the specified rule needs to be extended for the case of flexible subframe. According to the present invention, the user equipment 108 defers UL transmission in a flexible subframe occurring immediately after a measurement gap if subframe occurring immediately before the measurement gap is a downlink subframe or special subframe. Also, the user equipment 108 defers UL transmission in a flexible subframe occurring immediately after a measurement gap if subframe occurring immediately before the measurement gap is a flexible subframe.

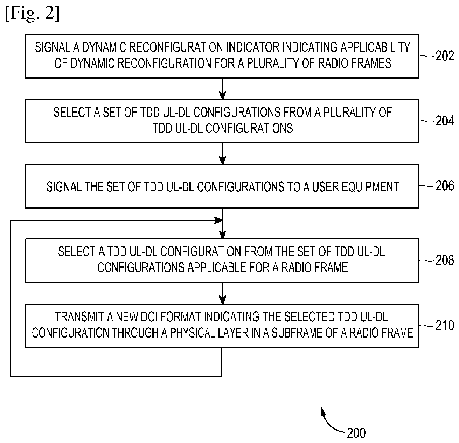

Figure 2 is a process flowchart 200 illustrating an exemplary method of indicating a TDD UL-DL configuration applicable for a radio frame, according to one embodiment. At step 202, a dynamic reconfiguration indicator indicating applicability of dynamic reconfiguration for a plurality of radio frames is signaled from the eNB 106. For example, if the dynamic reconfiguration indicator is set to '1', it implies that the dynamic reconfiguration is enabled for the serving cell. If the dynamic reconfiguration indicator is set to '0', then it implies the dynamic reconfiguration is not enabled for the serving cell. In one exemplary implementation, a dynamic reconfiguration indicator is signaled through a cell-specific system information broadcast message or through a UE-specific dedicated Radio Resource Control (RRC) signaling message. One skilled in the art would understand that the dynamic configuration indicator is signaled in any other message. In some embodiments, validity information associated with the dynamic reconfiguration indicator indicating duration for which dynamic reconfiguration of TDD UL-DL configuration is enabled is also provided to the user equipment 108 along with the dynamic reconfiguration indicator.

At step 204, a set of TDD UL-DL configurations is selected from a plurality of TDD UL-DL configurations. For example, a set of TDD UL-DL configurations (e.g., configurations 0, 1 and 2) are selected from seven TDD UL-DL configurations as depicted in Table 2 below.

### Table 2

**[Table 2]**

| **Configuration** | **TDD Reconfiguration Set bitmap** | **Subframe number** | | | | | | | | | |
|---|---|---|---|---|---|---|---|---|---|---|---|
| | | **0** | **1** | **2** | **3** | **4** | **5** | **6** | **7** | **8** | **9** |
| **0** | **1** | **D** | **S** | **U** | **U** | **U** | **D** | **S** | **U** | **U** | **U** |
| **1** | **1** | **D** | **S** | **U** | **U** | **D** | **D** | **S** | **U** | **U** | **D** |
| **2** | **1** | **D** | **S** | **U** | **D** | **D** | **D** | **S** | **U** | **D** | **D** |
| 3 | **0** | D | S | U | U | U | D | D | D | D | D |
| 4 | **0** | D | S | U | U | D | D | D | D | D | D |
| 5 | **0** | D | S | U | D | D | D | D | D | D | D |
| 6 | **0** | D | S | U | U | U | D | S | U | U | D |

At step 206, the set of TDD UL-DL configurations used for dynamic reconfiguration is signaled to the user equipment 108. In some embodiments, a "TDD reconfiguration set bitmap" indicating the set of TDD UL-DL configurations used for dynamic reconfiguration is signaled to the user equipment 108. The bitmap is indexed to a plurality of pre-defined TDD UL-DL configurations. The bitmap includes seven bits, each bit indexed to corresponding pre-defined TDD UL-DL configuration in the Table 2. The "TDD reconfiguration set bitmap" is indexed to the plurality of pre-defined TDD UL-DL configurations such that the left most bit corresponds to the TDD UL-DL configurations 0 while the right most bit corresponds to the TDD UL-DL configurations 6. For example, when TDD UL-DL configurations 0, 1, and 2 are selected for dynamic reconfiguration, the bitmap [1110000] is signaled to the user equipment 108 which indicates that the set of TDD UL-DL configuration constitutes TDD UL-DL configurations 0, 1, and 2. The bit'1' in the "TDD reconfiguration set bitmap" indicates that the corresponding indexed TDD UL-DL configuration is selected for dynamic reconfiguration while the bit '0' indicates that the corresponding indexed TDD UL-DL configuration is not selected. In one exemplary implementation, the "TDD configuration set bitmap" is signaled in a cell-specific system information broadcast (SIB) message in any of SIBs or a UE specific dedicated RRC signaling message.

When the dynamic reconfiguration is enabled and the eNB 106 signals the dynamic reconfiguration indicator set to '1' to UE 108, then the signaling of a set of TDD UL-DL configurations in step 204 is optional. In such case, the user equipment 108 assumes all the seven pre-defined TDD UL-DL configurations indicated in Table 2 are used for dynamic reconfiguration. In some embodiments, the eNB 106 signals the "TDD reconfiguration set bitmap" to the UE 108 either through cell-specific system information broadcast or through UE-specific dedicated RRC signaling. Alternatively, when the dynamic reconfiguration is disabled and the eNB 106 signals the dynamic reconfiguration indicator set to '0' to the UE 108, then the user equipment 108 assumes that the dynamic reconfiguration is not enabled for the serving cell and starts using the TDD UL-DL configuration indicated in a SIB-1 received from the eNB 106. In some embodiments, the serving cell signals a dynamic reconfiguration indicator either through cell-specific system information broadcast or through UE-specific dedicated RRC signaling.

It can be noted that, the eNB 106 need not signal the dynamic reconfiguration indicator to the UE at step 202, instead the eNB 106 may signal the "TDD reconfiguration set bitmap" indicating the set of TDD UL-DL configurations applicable for dynamic reconfiguration in the serving cell. Accordingly, the user equipment 108 understands that the dynamic reconfiguration is enabled for the serving cell. However, when the dynamic reconfiguration indicator is not signaled and the TDD reconfiguration set bitmap signaled to the UE indicates single TDD UL-DL configuration, then the user equipment 108 assumes that the dynamic TDD configuration is not enabled for the serving cell. In some embodiments, validity information associated with the "TDD reconfiguration set bitmap" indicating duration for which a set of TDD UL-DL configurations is valid is also provided to the user equipment 108 along with the "TDD reconfiguration set bitmap".

At step 208, a TDD UL-DL configuration for a current radio frame is selected by the eNB 106 from the indicated set of TDD UL-DL configurations. At step 212, a new DCI format indicating the selected TDD UL-DL configuration is transmitted through a physical layer signaling in a subframe (e.g., subframe #0 and/or subframe #5) of the current radio frame. In an exemplary implementation, the new DCI format is 3 bit information addressing the seven pre-defined TDD UL-DL configurations indicated in Table 2. For example, if the new DCI format indicates '011', it implies the TDD UL-DL configuration 3 is applicable for the current radio frame. The DCI format 111 is for future use if a new TDD configuration is defined apart from the seven configurations indicated in Table 2. Alternatively, the new DCI format indicates the TDD UL-DL configuration for subsequent radio frame(s). Accordingly, the user equipment 108 applies the TDD UL-DL configuration for the current radio frame and optionally the subsequent radio frame(s) upon receiving the DCI format. The process steps 208 and 210 may or may not be repeated for every radio frame. In some embodiments, validity information associated with the "new DCI format" indicating duration for which the indicated TDD UL-DL configuration is valid is also provided to the user equipment 108 along with the "new DCI format".

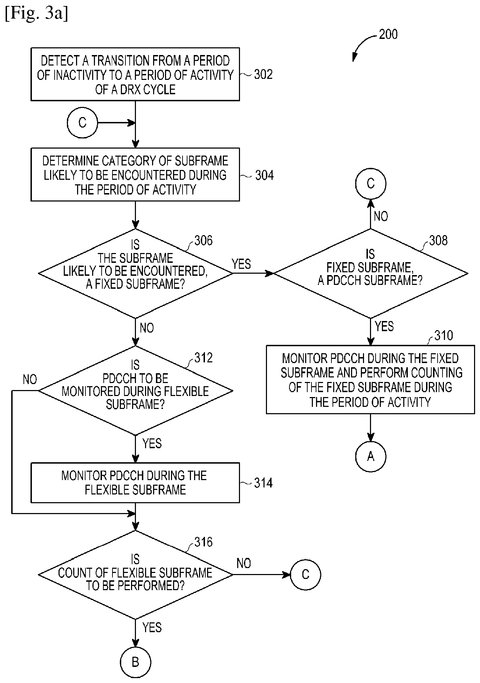

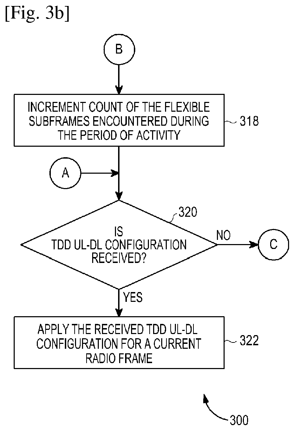

Figures 3a and 3b are a process flowchart 300 illustrating an exemplary method of determining TDD UL-DL configuration for a current radio frame upon waking up from a period of inactivity of a configured DRX cycle, according to one embodiment. At step 302, a transition from period of inactivity (also termed as off duration period) to a period of activity (also termed as on duration period) of the configured DRX cycle is detected. At step 304, category of a subframe likely to be encountered upon waking up from the period of inactivity is determined based on a set of TDD UL-DL configurations used for dynamic reconfiguration is indicated by the eNB 106. In some embodiments, category of subframes is determined by the user equipment 108 by performing an intersection of downlink (DL) subframes, special subframes and uplink (UL) subframes across the set of TDD UL-DL configurations upon receiving the "TDD reconfiguration set bitmap" from the eNB 106. It is appreciated that the intersection operation is equivalent to logical AND operation. For example, subframe category is determined as a fixed subframe if subframe type (e.g., DL subframe, UL subframe, special subframe) after intersection operation matches with the same subframe type across the set of TDD UL-DL configurations in the corresponding subframe location.

On the other hand, subframe category is determined as a flexible subframe if subframe type (e.g., DL subframe, UL subframe, special subframe) does not match with the same subframe type across the set of TDD UL-DL configurations in the corresponding subframe location. In these embodiments, category of a subframe likely to be encountered upon waking up from the period of inactivity is determined based on subframe number in which the user equipment 108 woke up from the period of inactivity of the configured DRX cycle. For example, consider that TDD UL-DL configurations 0, 1,2 and 6 are selected for dynamic reconfiguration among TDD UL-DL configurations 0 to 7 as shown in Table 3.

### Table 3

**[Table 3]**

| **Configuration** | **TDD Reconfiguration Set bitmap** | **Subframe number** | | | | | | | | | |
|---|---|---|---|---|---|---|---|---|---|---|---|
| | | **0** | **1** | **2** | **3** | **4** | **5** | **6** | **7** | **8** | **9** |
| 0 | **1** | **D** | **S** | **U** | **U** | **U** | **D** | **S** | **U** | **U** | **U** |
| 1 | **1** | **D** | **S** | **U** | **U** | **D** | **D** | **S** | **U** | **U** | **D** |
| 2 | **1** | **D** | **S** | **U** | **D** | **D** | **D** | **S** | **U** | **D** | **D** |
| 3 | **0** | D | S | U | U | U | D | D | D | D | D |
| 4 | **0** | D | S | U | U | D | D | D | D | D | D |
| 5 | **0** | D | S | U | D | D | D | D | D | D | D |
| 6 | **1** | **D** | **S** | **U** | **U** | **U** | **D** | **S** | **U** | **U** | **D** |
| **Subframe Category** | | **FX** | **FX** | **FX** | **FL** | **FL** | **FX** | **FX** | **FX** | **FL** | **FL** |
| **Subframe Type** | | **D** | **S** | **U** | **AM** | **AM** | **D** | **S** | **U** | **AM** | **AM** |
| **PDCCH subframe according to intersection operation rule** | | **P** | **P** | | | | **P** | **P** | | | |

The user equipment 108 determines subframe category for each subframe location (subframes #0 to #9) across the TDD UL-DL configurations 0, 1,2, and 6 by performing intersection operation for each subframe type (e.g., DL subframe, UL subframe and special subframe) across the set of TDD UL-DL configurations 0, 1,2, and 6 for corresponding subframe location. For example, the user equipment 108 performs intersection of DL subframe for subframe #0 (SF#0) across the TDD UL-DL configurations 0, 1, 2, and 6 and determines the subframe category associated with the (SF#0) as fixed subframe indicated as 'FX' in Table 3. Similarly, the user equipment 108 performs intersection of each subframe type for (SF#3) across the TDD UL-DL configurations 0, 1, 2, and 6 and determines the subframe category associated with the SF#3 as flexible subframe indicated as 'FL' in Table 3. In this manner, the user equipment 108 can determine subframe category for each of subframes #0 to #9 of a radio frame. Accordingly, upon waking up from the period of inactivity, the user equipment 108 can determine category of subframe in a current radio frame that is likely to be encountered using on pre-determined category of subframes in the current radio frame. For example, if the user equipment 108 wakes up at subframe #0 (SF#0) of a radio frame, the user equipment 108 determines that the subframe #0 (SF#0) is a fixed subframe. Alternatively, if the user equipment 108 wakes up at subframe #3 (SF#3) of the radio frame, the user equipment 108 determines that the subframe #3 is a flexible subframe. From the user equipment 108 perspective, when the user equipment108 wakes from a period of inactivity of the configured DRX cycle and encounters a flexible subframe, then the encountered subframe is ambiguous to the UE 108 (indicated as 'AM' in Table 3) because the TDD UL-DL configuration applicable to the current radio frame is not known to the user equipment 108. From the eNB 106 perspective, the flexible subframe means that the subframe type can be configured either as D or U. From the user equipment 108 perspective, the subframe type is not known to the user equipment 108 (i.e., ambiguous as whether the subframe type is downlink or uplink) when the UE wakes up from the period of inactivity of the configured DRX cycle and encounters a flexible subframe category.

At step 306, it is determined whether the subframe encountered upon waking up from the inactive period is a fixed subframe. If it is determined that the subframe is the fixed subframe, then at step 308, it is determined whether the fixed subframe is a PDCCH subframe. In some embodiment, the fixed subframe is identified as a PDCCH subframe if the subframe type corresponding to the fixed subframe is one of a downlink subframe or a special subframe indicated as 'P' in Table 3. At step 310, PDCCH is monitored during the fixed subframe and step 320 is performed. Also, at step 310, counting of the fixed subframe towards at least one of the DRX timers (e.g., on duration timer, DRX inactivity timer and/or DRX retransmission timer) is performed during the period of activity of the configured DRX cycle.

If, at step 306, it is determined that the subframe is a flexible subframe, then at step 312, it is determined whether PDCCH is to be monitored during the flexible subframe. If it is determined that the PDCCH is to be monitored during the flexible subframe, then at step 314, the PDCCH is monitored during the flexible subframe. If it is determined that PDCCH is not to be monitored during the flexible subframe, then step 316 is performed. At step 316, it is determined whether count of the flexible subframe towards the DRX timers is to be performed during period of activity of the DRX cycle. If the count of the flexible subframe towards the DRX timers is to be performed, then at step 318, the count of flexible subframes encountered during the period of activity of the DRX cycle is incremented towards the respective DRX timers. Otherwise, the process is routed to step 304 in which it is determined whether subsequent subframe during the period of activity of the DRX cycle is a fixed subframe or a flexible subframe.

According to the present invention, the user equipment 108 determines whether PDCCH is to be monitored on the flexible subframe and count of the flexible subframe is to be performed based on a set of rules. In one embodiment, upon receiving a set of TDD UL-DL configurations from the eNB 106, union of subframe types corresponding to each subframe is performed across the set of TDD UL-DL configurations according to an union operation rule. It is appreciated that, the union operation is equivalent to a logical OR operation. One or more flexible subframes among the flexible subframes are identified as PDCCH subframe if at least one subframe type in the corresponding subframe location across the indicated set of TDD UL-DL configurations is one of a downlink subframe or a special subframe as shown in Table 4.

### Table 4

**[Table 4]**

| **Configuration** | **TDD Reconfiguration Set bitmap** | **Subframe number** | | | | | | | | | |
|---|---|---|---|---|---|---|---|---|---|---|---|
| | | **0** | **1** | **2** | **3** | **4** | **5** | **6** | **7** | **8** | **9** |
| 0 | **1** | **D** | **S** | **U** | **U** | **U** | **D** | **S** | **U** | **U** | **U** |
| 1 | **1** | **D** | **S** | **U** | **U** | **D** | **D** | **S** | **U** | **U** | **D** |
| 2 | **1** | **D** | **S** | **U** | **D** | **D** | **D** | **S** | **U** | **D** | **D** |
| 3 | **0** | D | S | U | U | U | D | D | D | D | D |
| 4 | **0** | D | S | U | U | D | D | D | D | D | D |
| 5 | **0** | D | S | U | D | D | D | D | D | D | D |
| **6** | **1** | **D** | **S** | **U** | **U** | **U** | **D** | **S** | **U** | **U** | **D** |
| **Subframe Category** | | **FX** | **FX** | **FX** | **FL** | **FL** | **FX** | **FX** | **FX** | **FL** | **FL** |
| **Subframe Type** | | **D** | **S** | **U** | **AM** | **AM** | **D** | **S** | **U** | **AM** | **AM** |
| **PDCCH subframe according to union operation rule** | | **P** | **P** | | **P** | **P** | **P** | **P** | | **P** | **P** |

In Table 4, subframe #3 (SF#3) is a flexible subframe which can considered for PDCCH monitoring according to the union operation rule. SF#3 in the TDD UL-DL configuration 2 is 'D'. Therefore, according to union operation rule, flexible subframe SF#3 can be considered as PDCCH subframe as indicated as 'P' in Table 4. Similarly, subframes #4, #8, and #9 are flexible subframes and can be considered as PDCCH subframe according to the union operation rule.

During the activity period of the DRX cycle, it is determined whether the flexible subframe belongs to the one or more flexible subframes which are identified as PDCCH subframes based on subframe number associated with the flexible subframe. If one or more flexible subframes are considered as PDCCH subframe according to the union operation rule, then PDCCH is monitored during the flexible subframe. Also, the flexible subframe identified as PDCCH subframe is counted towards the respective DRX timers during the activity period of the DRX cycle.

In another embodiment, PDCCH is not monitored during the flexible subframe as all the subframe types corresponding to the flexible subframe across the set of TDD UL-DL configurations do not contain DL subframe or special subframe. In Table 3, subframe #3 (SF#3) is a flexible subframe which is not considered for PDCCH monitoring according to the intersection operation rule. However, the flexible subframe is counted during the period of activity of the configured DRX cycle according to the union operation rule.

In yet another embodiment, PDCCH is not monitored during the flexible subframe and the flexible subframe is not counted during the activity period of the DRX cycle.

In further another embodiment, a primary TDD UL-DL configuration from the indicated set of TDD UL-DL configurations is determined. Further, a subframe type of a primary TDD UL-DL configuration corresponding to the flexible subframe is used to determine whether the flexible subframe can be considered as PDCCH subframe. It is determined whether the subframe type corresponding to the flexible subframe in the primary TDD UL-DL configuration is a DL subframe or a special subframe. If the subframe type is downlink subframe or a special subframe, then the corresponding flexible subframe is considered as PDCCH subframe. For example, if the flexible subframe corresponds to subframe #4 (SF#4) and subframe type corresponding to the subframe #4 of the primary TDD UL-DL configuration is downlink subframe or special subframe, then the flexible subframe (SF#4) is identified as PDCCH subframe as shown in Table 5.

### Table 5

**[Table 5]**

| **Configuration** | **TDD Reconfiguration Set bitmap** | **Subframe number** | | | | | | | | | |
|---|---|---|---|---|---|---|---|---|---|---|---|
| | | **0** | **1** | **2** | **3** | **4** | **5** | **6** | **7** | **8** | **9** |
| **0** | **1** | **D** | **S** | **U** | **U** | **U** | **D** | **S** | **U** | **U** | **U** |
| **1** | **1** | **D** | **S** | **U** | **U** | **D** | **D** | **S** | **U** | **U** | **D** |
| 2 | 1 | **D** | **S** | **U** | **D** | **D** | **D** | **S** | **U** | **D** | **D** |
| 3 | **0** | D | S | U | U | U | D | D | D | D | D |
| 4 | **0** | D | S | U | U | D | D | D | D | D | D |
| 5 | **0** | D | S | U | D | D | D | D | D | D | D |
| 6 | **0** | D | S | U | U | U | D | S | U | U | D |
| **Subframe Category** | | **FX** | **FX** | **FX** | **FL** | **FL** | **FX** | **FX** | **FX** | **FL** | **FL** |
| **Subframe Type** | | **D** | **S** | **U** | **AM** | **AM** | **D** | **S** | **U** | **AM** | **AM** |
| **PDCCH subframe according to primary TDD configuration (i.e Configuration 1)** | | **P** | **P** | | | **P** | **P** | **P** | | | **P** |

Following the primary TDD configuration rule, subframes #3 and #8 are flexible subframes but not considered as PDCCH subframes while SF#4 and SF#9 are considered as PDCCH subframes.

If the corresponding subframe type in the primary TDD configuration is DL subframe or special subframe, PDCCH is monitored during the flexible subframe according to following the primary TDD configuration rule. Further, the flexible subframe is counted towards the DRX timers during the activity period of the DRX cycle. This is applicable when one TDD UL-DL configuration in the set of TDD UL-DL configurations is signaled as a primary TDD UL-DL configuration via a SIB1. For example, the primary TDD UL-DL configuration is a TDD UL-DL configuration generally used by legacy user equipment 108s for Hybrid Automatic Repeat Request (HARQ) timing and DRX operation. It can be noted that, depending on traffic conditions, the eNB 106 may change primary TDD UL-DL configuration and notify the change in the primary TDD UL-DL configuration to the user equipment 108 via a system information change notification procedure which has a minimum modification period of 640ms. For example, current primary TDD UL-DL configuration is configuration 1 when a set of TDD UL-DL configuration 0, 1 and 2 are used for dynamic reconfiguration as shown in Table 5. Suppose a TDD UL-DL configuration 2 is set as a primary TDD UL-DL configuration. In such case, the eNB 106 indicates the change in primary TDD UL-DL configuration from the TDD UL-DL configuration 1 to the TDD UL-DL configuration 2 as primary TDD UL-DL configuration via SIB-1.

In yet a further embodiment, a subframe type of the primary TDD UL-DL configuration corresponding to the flexible subframe is used to determine whether the flexible subframe can be considered as PDCCH subframe. It is determined whether the subframe type corresponding to the flexible subframe in the primary TDD UL-DL configuration is a DL subframe. If the subframe type is a downlink subframe, then the corresponding flexible subframe is considered as PDCCH subframe and PDCCH is monitored during the flexible subframe. Further, the corresponding flexible subframe is counted towards the DRX timers during the period of activity of the DRX cycle. This is applicable when one TDD UL-DL configuration in the set of TDD UL-DL configurations is signaled as a primary TDD UL-DL configuration via a SIB1.

In still another embodiment, information on PDCCH subframes are explicitly indicated to the user equipment 108 by the eNB 106 via system information broadcast message or a dedicated signaling message. It is determined whether the flexible subframe is a PDCCH subframe based on the PDCCH subframes indicated by the eNB 106. If the flexible frame is a PDCCH frame, PDCCH is monitored during the flexible subframe. Further, the flexible subframe is counted towards the DRX timers during the activity period of the DRX cycle.

In further another embodiment, PDCCH subframe is pre-configured in the user equipment 108 when the dynamic reconfiguration is enabled for the serving cell. If the flexible frame corresponds to a PDCCH frame, PDCCH is monitored during the flexible subframe. Further, the flexible subframe is counted towards the DRX timers during the activity period of the DRX cycle.

At step 320, it is determined whether a TDD UL-DL configuration applicable for a current radio frame is received during monitoring of the PDCCH. For example, the user equipment 108, while monitoring PDCCH, may receive a signaling message indicating at least one of TDD UL-DL configuration applicable for one or more radio frames, validity information associated with the TDD UL-DL configuration, and/or a system frame number (SFN) information. For example, the user equipment 108 may receive the TDD UL-DL configuration if the subframe is subframe #0 or subframe #5 of the current radio frame. The TDD UL-DL configuration is selected from the indicated set of TDD UL-DL configurations and is signaled in the PDCCH subframe. The validity information indicates duration for which the indicated TDD UL-DL configuration is valid. The SFN information indicates a system frame number (SFN) at which the indicated TDD UL-DL configuration is to be applied. The signaling message is one of a new Downlink Control Information (DCI) format message, a TDD Configuration Medium Access Control (MAC) Control Element (CE) message and a Radio Resource Control (RRC) message. It can be noted that, the step 320 is performed when the PDCCH is monitored irrespective of whether the count of the PDCCH subframe is performed or not.

If the TDD UL-DL configuration is received, then at step 322, the TDD UL-DL configuration is applied during remaining subframes of the current radio frame that are likely to be encountered during the period of activity of the DRX cycle. If the TDD UL-DL configuration applicable for the current radio frame is not received, then the process is routed at step 304.

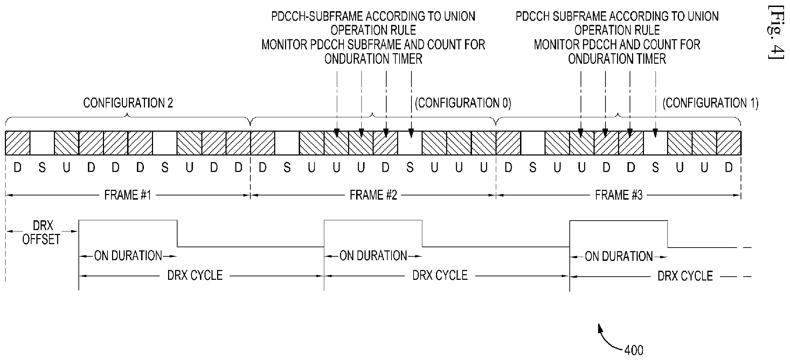

Figure 4 is a schematic representation 400 illustrating a process of monitoring PDCCH and counting DRX timers. Consider that the eNB 106 has configured TDD UL-DL configurations 0, 1 and 2 for dynamic reconfiguration from the TDD UL-DL configurations 0-6 for the serving cell. Also, consider that the user equipment 108 has received a dynamic reconfiguration indicator indicating that dynamic TDD UL-DL configuration is enabled for the serving cell and has indicated applicability of the TDD UL-DL configurations 0, 1, and 2 in a TDD reconfiguration set bitmap.

Upon receiving the TDD UL-DL configurations 0, 1, and 2, the user equipment 108 determines category of subframes by performing an intersection operation on downlink (DL) subframes, special subframes and uplink (UL) subframes across the set of TDD UL-DL configurations 0, 1 and 2. Also, the user equipment 108 identifies PDCCH frames across the set of TDD UL-DL configurations 0, 1 and 2 by performing union operation on DL subframe and special subframe across the set of TDD UL-DL configurations.

Now consider that, TDD UL-DL configurations 2, 0, and 1 are configured for radio frames #1, #2 and #3 respectively as depicted in Figure 4. For the purpose of illustration, consider that DRX start offset is equal to 3ms, ON duration timer is equal to 4ms, and DRX cycle is of 10ms length, and DRX inactivity timer is equal to 0ms.

According to the configured DRX cycle, the user equipment 108 wakes up from the period of inactivity in the subframe #3 of the radio frame #2and enters period of inactivity at the end of subframe #6 on expiry of the on duration timer. The user equipment 108 is not aware of the TDD UL-DL configuration applicable for the radio frame #2 when it wakes up in SF#3 of radio frame #2. From the user equipment perspective, SF#3 is an ambiguous subframe as the user equipment 108 determines that the subframe #3 is a flexible frame according to the intersection operation. Further, the user equipment 108 determines that the subframe #3 corresponds to one of the identified PDCCH subframes according to the rule governed by union operation for identifying PDCCH subframe as shown in Table 6 below.

### Table 6

**[Table 6]**

| **Configuration** | **TDD Reconfiguration Set bitmap** | **Subframe number** | | | | | | | | | |
|---|---|---|---|---|---|---|---|---|---|---|---|
| | | **0** | **1** | **2** | **3** | **4** | **5** | **6** | **7** | **8** | **9** |
| **0** | **1** | **D** | **S** | **U** | **U** | **U** | **D** | **S** | **U** | **U** | **U** |
| **1** | **1** | **D** | **S** | **U** | **U** | **D** | **D** | **S** | **U** | **U** | **D** |
| **2** | **1** | **D** | **S** | **U** | **D** | **D** | **D** | **S** | **U** | **D** | **D** |
| **3** | **0** | **D** | **S** | U | U | U | **D** | **D** | **D** | **D** | **D** |
| **4** | **0** | **D** | **S** | U | U | **D** | **D** | **D** | **D** | **D** | **D** |
| **5** | **0** | **D** | **S** | U | **D** | **D** | **D** | **D** | **D** | **D** | **D** |
| **6** | **0** | **D** | **S** | **U** | **U** | **U** | **D** | **S** | U | **U** | **D** |
| **Subframe Category** | | **FX** | **FX** | **FX** | **FL** | **FL** | **FX** | **FX** | **FX** | **FL** | **FL** |
| **Subframe Type** | | **D** | **S** | **U** | **AM** | **AM** | **D** | **S** | **U** | **AM** | **AM** |
| **PDCCH subframe according to union operation rule** | | **P** | **P** | | **P** | **P** | **P** | **P** | | **P** | **P** |

Accordingly, the user equipment 108 monitors PDCCH during the subframe #3 and counts the flexible subframe towards the on duration timer. Consider that, during PDCCH monitoring, the user equipment 108 does not receive a TDD UL-DL configuration applicable for the radio frame #2. Further, the user equipment 108 determines category of the subframe #4. The user equipment 108 determines that the subframe #4 is also a flexible subframe and monitors PDCCH during the subframe #4 and counts the flexible subframe towards on duration timer according to the union operation rule. However, the user equipment 108 does not receive TDD UL-DL configuration applicable for the radio frame #2 in SF#4 since from the eNB perspective SF#4 is an uplink subframe.

Since the user equipment 108 has not received a TDD UL-DL configuration in the subframe #3 and subframe #4, the user equipment 108 further determines the category of subframe #5 as fixed subframe. As subframe type associated with the subframe #5 is downlink subframe, the user equipment 108 monitors PDCCH during the subframe #5. During the PDCCH monitoring, the user equipment 108 receives a new DCI format that signals TDD UL-DL configuration for the radio frame #2, or a DL assignment message on PDSCH and/or a TDD Configuration MAC CE indicating TDD UL-DL configuration applicable for the radio frame #2. The user equipment 108 applies the TDD UL-DL configuration (i.e., the configuration 0) received in the subframe #5. Furthermore, the user equipment 108 monitors PDCCH and counts DRX timers based on the applied TDD UL-DL configuration for the remaining activity period of the DRX cycle. Since the DRX inactivity timer is equal to 0ms, the ON duration timer expires after subframe #6 and the user equipment 108 enters period of inactivity after the subframe #6. If the user equipment 108 has received a DL assignment message in the subframe #5 or subframe #6 of the radio frame #2, the user equipment 108 performs HARQ ACK/NACK according to timing for the TDD UL-DL configuration 0. In this manner, the user equipment 108 determines TDD UL-DL configuration applicable during the radio frame #2.

The above process is repeated when the user equipment 108 wakes up from a period of inactivity of the DRX cycle a next time. For example, the user equipment 108 wakes up in the subframe #3 of the radio frame #3 which is a flexible subframe as shown in Table 6. The user equipment 108 monitors the PDCCH during the subframe #3 according to union operation rule but does not receive a TDD UL-DL configuration applicable for the radio frame #3. Then, the user equipment 108 increments the on duration timer and proceeds with the subframe #4 and determines that the subframe #4 is a flexible subframe. Further, the user equipment 108 determines that the subframe #4 is a PDCCH subframe based on the union operation performed on the set of TDD UL-DL configuration 0, 1 and 2. Accordingly, the user equipment 108 monitors the PDCCH during the subframe #4 and counts the DRX timer. Consider that the user equipment 108 receives a new DCI format or DL assignment message on PDSCH along with TDD Configuration MAC CE containing TDD UL-DL configuration applicable for the radio frame #3 or only the TDD Configuration MAC CE containing TDD UL-DL configuration. Based on the TDD UL-DL configuration received from the eNB 106, the user equipment 108 monitors PDCCH during the remaining period of activity of the configured DRX cycle.

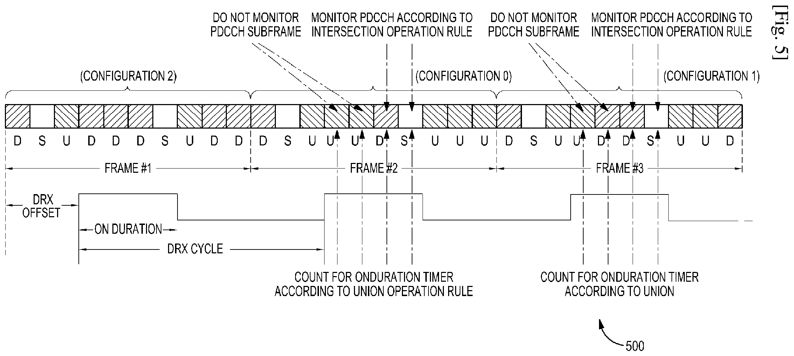

Figure 5 is a schematic representation 500 illustrating another process of monitoring PDCCH and counting DRX timers. According to the process illustrated in Figure 5, the user equipment 108 does not monitor PDCCH when a flexible frame is encountered according to the rule governed by intersection operation for identifying PDCCH subframe as shown in Table 7, but counts the flexible subframe towards the on duration timer during the period of activity of the DRX cycle.

According to the configured DRX cycle, the user equipment 108 wakes up from the period of inactivity in the subframe #3 of the radio frame #2 and enters period of inactivity at the end of subframe #6 as the on duration timer is 4ms and inactivity timer is 0ms. Since the user equipment 108 is not aware of the TDD UL-DL configuration applicable for the radio frame #2, the user equipment 108 may not know which of subframes to be monitored during period of activity.

Upon waking up from the period of inactivity, the user equipment 108 determines that the subframe #3 is a flexible frame. Further, the user equipment 108 determines that the subframe #3 does not correspond to one of the identified PDCCH subframes according to the intersection operation. Accordingly, the user equipment 108 does not monitor PDCCH during the subframe #3. However, the user equipment 108 determines that the flexible subframe needs to be counted towards the on duration timer during the period of activity. Hence, the user equipment 108 counts the flexible subframe towards the period of activity as shown in Figure 5 and the user equipment 108 moves to subframe #4 (SF#4) and determines that subframe #4 (SF#4) is also a flexible subframe. The user equipment 108 does not monitor the PDCCH in the SF#4 according to the intersection operation rule. However, the user equipment 108 counts the flexible frame towards the on duration timer during the period of activity of the DRX cycle.

Since the user equipment 108 has not monitored PDCCH in the subframe #3 and subframe #4, there is no possibility of knowing the TDD UL-DL configuration applicable for the radio frame #2. Therefore, the user equipment 108 determines subframe category for the subframe #5. The user equipment 108 determines that the subframe #5 is fixed subframe. Also, the user equipment 108 determines that PDCCH is to be monitored according to the intersection operation rule as the fixed subframe #5 is a PDCCH subframe. In one embodiment, the user equipment 108 refers to the Table 7 below to determine whether PDCCH is to be monitored during the fixed subframe #5. Accordingly, the user equipment 108 monitors the PDCCH during the fixed subframe #5 while the on duration timer is incremented.

### Table 7

**[Table 7]**

| **Configurati on** | **TDD Reconfiguration Set bitmap** | **Subframe number** | | | | | | | | | |
|---|---|---|---|---|---|---|---|---|---|---|---|
| | | **0** | **1** | **2** | **3** | **4** | **5** | **6** | **7** | **8** | **9** |
| **0** | **1** | **D** | **S** | **U** | U | **U** | **D** | **S** | **U** | **U** | **U** |
| **1** | **1** | **D** | **S** | **U** | **U** | **D** | **D** | **S** | **U** | **U** | **D** |
| **2** | **1** | **D** | **S** | **U** | **D** | **D** | **D** | **S** | **U** | **D** | **D** |
| **3** | **0** | **D** | **S** | **U** | **U** | **U** | **D** | **D** | **D** | **D** | **D** |
| **4** | **0** | **D** | **S** | **U** | **U** | **D** | **D** | **D** | **D** | **D** | **D** |
| **5** | **0** | **D** | **S** | **U** | **D** | **D** | **D** | **D** | **D** | **D** | **D** |
| **6** | **0** | **D** | **S** | **U** | U | U | **D** | **S** | **U** | **U** | **D** |
| **Subframe Category** | | **FX** | **FX** | **FX** | **FL** | **FL** | **FX** | **FX** | **FX** | **FL** | **FL** |
| **Subframe Type** | | **D** | **S** | **U** | **AM** | **AM** | **D** | **S** | **U** | **AM** | **AM** |
| **PDCCH subframe according to intersection operation rule** | | **P** | **P** | | | | **P** | **P** | | | |

During the PDCCH monitoring, the user equipment 108 receives a new DCI format that signals TDD UL-DL configuration for the radio frame #2, or a DL assignment message on Physical Downlink Shared Channel (PDSCH) and/or a TDD Configuration MAC CE message indicating TDD UL-DL configuration applicable for the radio frame #2. The user equipment 108 applies the TDD UL-DL configuration (i.e., the configuration 0) received in the subframe #5. Furthermore, the user equipment 108 monitors PDCCH and performs counting of DRX timers based on the applied TDD UL-DL configuration for the remaining activity period of the DRX cycle. Since the DRX activity timer is equal to 0ms, the ON duration timer expires after subframe #6 and the user equipment 108 enters period of inactivity after the subframe #6. If the user equipment 108 has received a DL assignment message in the subframe #5 or subframe #6 of the radio frame #2, the user equipment 108 performs HARQ ACK/NACK according to timing for the TDD UL-DL configuration 0. In this manner, the user equipment 108 determines TDD UL-DL configuration applicable during the radio frame #2.

The above process is repeated when the user equipment 108 wakes up from a period of inactivity of the DRX cycle a next time. For example, the user equipment 108 wakes up in the subframe #3 (SF#3) of the radio frame #3 which is anambiguous type subframe and determines the category of subframe#3 as flexible subframe. According to the intersection operation rule to identify PDCCH subframe, the user equipment 108 does not monitor the PDCCH during the subframe #3 and the subframe #4 as the subframe #3 and subframe #4 are not identified as PDCCH subframe but counts the subframe #3 and subframe #4 towards the on duration timer of the configured DRX cycle. The user equipment 108 monitors PDCCH during the subframe #5 and subframe #6 according to the intersection operation as the subframe #5 and the subframe #6 are fixed subframes of DL and special type respectively as shown in Figure 5. Consider that the user equipment 108 receives a new DCI format or DL assignment message on PDSCH along with TDD Configuration MAC CE containing TDD UL-DL configuration (e.g., configuration 1) applicable for the radio frame #3 or just the TDD Configuration MAC CE message containing TDD UL-DL configuration. Based on the TDD UL-DL configuration 1, the user equipment 108 monitors PDCCH during the remaining period of activity and performs counting of DRX timers accordingly.

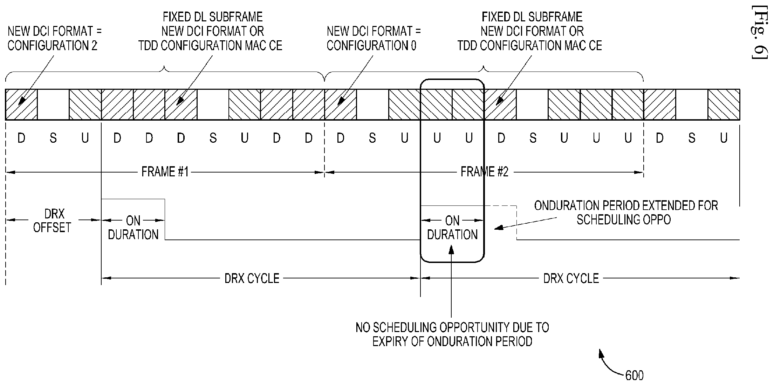

Figure 6 is a schematic representation 600 illustrating extending on duration timer of a DRX cycle to determine TDD UL-DL configuration applicable for a current radio frame. Consider that, for dynamic reconfiguration, TDD UL-DL configurations 2, 0, and 1 are configured for radio frames 1, 2 and 3 respectively. For the purpose of illustration, consider that DRX start offset is equal to 3ms, ON duration timer is equal to 2ms, and DRX cycle is of 10ms length, and DRX inactivity timer is equal to 0ms.

According to the configured DRX cycle, the user equipment 108 wakes up from a period of inactivity in subframe #3 of a radio frame #2. Also, the user equipment 108 is not aware of a TDD UL-DL configuration applicable for the radio frame #2. It can be seen from Figure 6 that subframe #3 and subframe #4 are coinciding with period of activity of the DRX cycle and the on duration timer expires at the end of SF#4. Further, the user equipment 108 determines that the subframe #3 and subframe #4 are flexible subframes. The user equipment 108 monitors PDCCH during the subframe #3 and the subframe #4 and counts the flexible subframes towards the on duration timer during the period of activity. Consider that the user equipment 108 has not received TDD UL-DL configuration applicable for the radio frame #2 in the subframe #3 and the subframe #4.

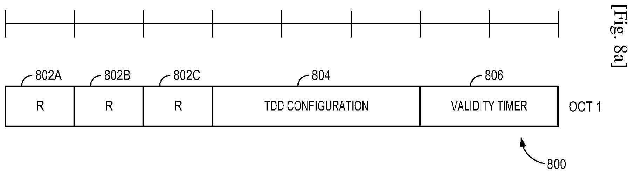

As the on duration timer expires at the end of subframe #4 and the user equipment 108 did not receive a new DCI format or DL assignment message during the subframe #3 and the subframe#4 of the radio frame #2, the user equipment 108 extends the on duration timer for 1ms duration as the subframe #5 is a fixed subframe. In some embodiments, the eNB 106 signals a new DCI format indicating a TDD UL-DL configuration applicable for a radio frame in a first half (e.g., subframe #0) and second half (subframe #5) of said radio frame. Thus, the user equipment 108 extends the on duration timer by 1ms as the user equipment 108 expects a new DCI format indicating a TDD UL-DL configuration applicable for the radio frame #2 in the subframe #5. Accordingly, the user equipment 108 monitors PDCCH during the subframe #5 and receives new DCI format or DL assignment message along with a TDD Configuration MAC CE indicating TDD UL-DL configuration applicable for the radio frame #2. Exemplary TDD Configuration MAC CE used for indicating TDD UL-DL configuration is shown in Figures 8a-8e. It can be noted that, the eNB 106 signals a TDD Configuration MAC CE indicating a TDD UL-DL configuration on a PDSCH of a DL subframe where the user equipment 108 is expected to wake up from a period of inactivity or ON duration timer is running. It can be noted that, the TDD Configuration MAC CE received on the PDSCH is addressed by PDCCH using C-RNTI.

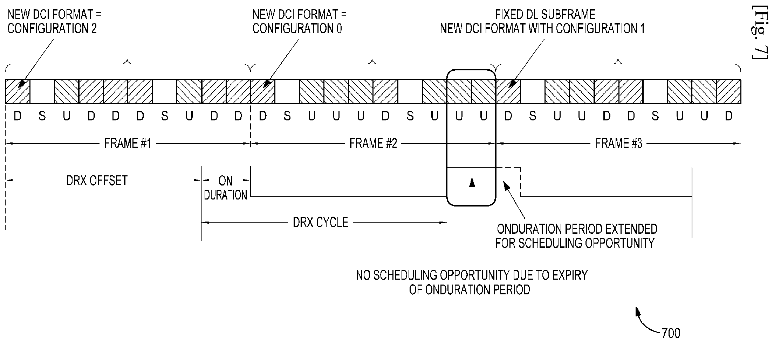

Figure 7 is a schematic representation 700 illustrating extending on duration timer of a DRX cycle to determine TDD UL-DL configuration applicable for a next radio frame. Consider that, for dynamic reconfiguration, TDD UL-DL configurations 2, 0, and 1 are configured for radio frames 1, 2 and 3 respectively. For the purpose of illustration, consider that DRX start offset is equal to 8ms, ON duration timer is equal to 2ms, and DRX cycle is of 10ms length, and DRX inactivity timer is equal to 0ms.

Suppose the user equipment 108 wakes up from a period of inactivity in subframe #8 of a radio frame #2. Also, the user equipment 108 is not aware of a TDD UL-DL configuration applicable for the radio frame #2. It can be seen from Figure 7 that subframe #8 and subframe #9 are coinciding with period of activity of the DRX cycle and the on duration timer expires at the end of SF#9. Further, the user equipment 108 determines that the subframe #8 and subframe #9 are flexible sub frames. The user equipment 108 monitors PDCCH during the subframe #8 and the subframe #9 and counts the flexible subframes towards the on duration timer during the period of activity. Consider that the user equipment 108 has not received TDD UL-DL configuration applicable for the radio frame #2 in the subframe #8 and the subframe #9.

As the on duration timer expires at the end of subframe #9 and the user equipment 108 did not receive a new DCI format or DL assignment message during the subframe #8 and the subframe#9 of the radio frame #2, the user equipment 108 extends the on duration timer for 1ms duration as subframe #0 of a radio frame #3 is a fixed subframe. Since the eNB 106 signals a new DCI format indicating a TDD UL-DL configuration applicable for a radio frame in a first half (e.g., subframe #0) and second half (subframe #5) of said radio frame, the user equipment 108 extends the on duration timer by 1ms as the user equipment 108 expects a new DCI format indicating a TDD UL-DL configuration applicable for the radio frame #3 in the subframe #0. Accordingly, the user equipment 108 monitors PDCCH during the subframe #0 and receives a new DCI format or DL assignment message along with a TDD Configuration MAC CE indicating TDD UL-DL configuration applicable for the radio frame #3.

Figures 8a to 8e illustrate schematic representations of TDD Configuration MAC CE formats carrying TDD UL-DL configuration applicable for a current radio frame and/or subsequent radio frame, according to one embodiment. In some embodiments, the eNB 106 communicates TDD UL-DL configuration applicable for a radio frame in a TDD Configuration MAC CE depicted in Figures 8a to 8e instead of a new DCI format when medium to slow reconfiguration in order of few hundreds of milliseconds is desired.

Figure 8a illustrates a schematic representation depicting various fields of a TDD Configuration MAC CE 800, according to one embodiment. In Figure 8a, the TDD Configuration MAC CE 800 includes reserved fields 802A-C, a TDD configuration field 804, and a validity timer 806. The TDD configuration field 804 indicates a TDD UL-DL configuration applicable for a current radio frame. For example, the TDD configuration field 804 indicates which TDD UL-DL configuration out of the indicated set of TDD UL-DL configuration is configured for the current radio frame. For example, if the TDD UL-DL configuration 0 is configured for the current radio frame, the TDD configuration field 804 indicates '000'. The validity timer field 806 indicates time period for which the TDD UL-DL configuration indicated by field 804 is applicable for one or more radio frames. For example, the validity timer value may be equal to 320ms, 640ms, 1280ms, and 2560ms.

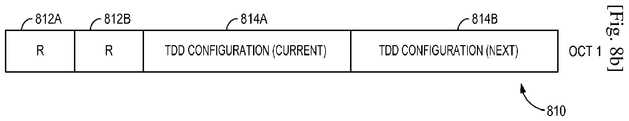

Referring to Figure 8b, the TDD Configuration MAC CE 810 includes reserved fields 812A-B, and a TDD configuration field 814A-B. The TDD configuration field 814A indicates TDD UL-DL configuration applicable for current radio frame. The TDD configuration field 814B indicates TDD UL-DL configuration application for a subsequent radio frame(s).

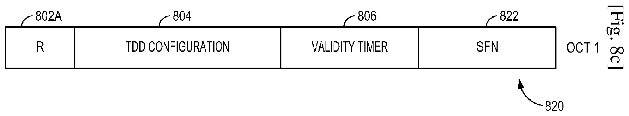

Referring to Figure 8c, the TDD Configuration MAC CE 820 is similar to the TDD Configuration MAC CE 800 of Figure 8a, except the TDD Configuration MAC CE 820 includes additional SFN field 822 of 2 bits. The SFN field 822 indicates an absolute SFN start value for when the user equipment 108 has apply a TDD UL-DL configuration indicated in the TDD configuration field 804. For example, 2 bits SFN start value may be {SFN0, SFN256, SFN 512, SFN768}.

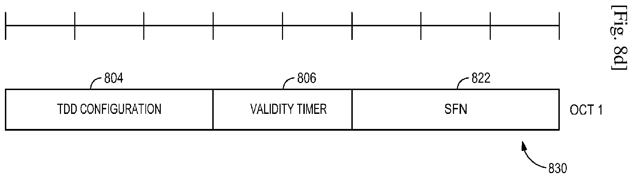

Referring to Figure 8D, the TDD Configuration MAC CE 830 is similar to the TDD Configuration MAC CE 820 of Figure 8c, except the TDD Configuration MAC CE 830 includes SFN field 822 of 3 bits size. For example, 3 bits SFN start value may be {SFN0, SFN128, SFN256, SFN384, SFN 512, SFN640, SFN768, SFN896}.

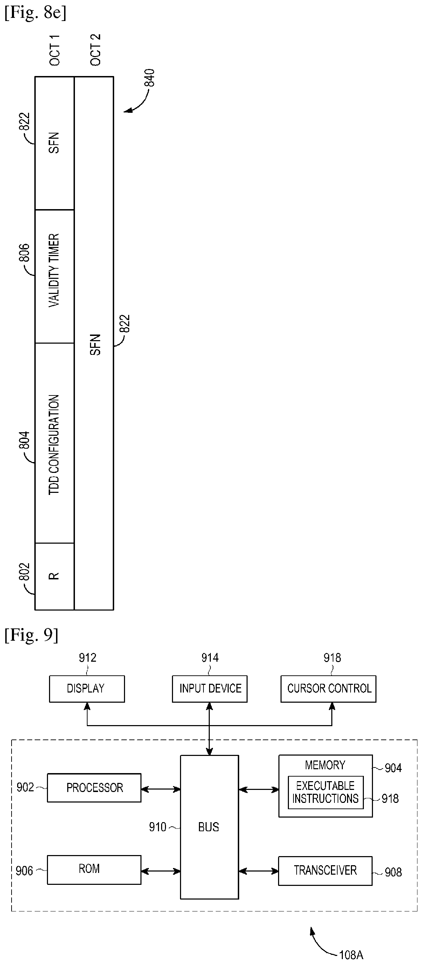

Referring to Figure 8e, the TDD Configuration MAC CE 840 is similar to the TDD Configuration MAC CE 820 of Figure 8c, except the TDD Configuration MAC CE 840 includes SFN field 822 of 10 bits size. The values for validity timer and SFN should be treated as example and not the limiting case.

In additional embodiments, the user equipment 108 may perform radio resource management (RRM)/radio link monitoring (RLM)/ channel state information (CSI) measurements during fixed subframe(s) of downlink or special type for maintaining accuracy of measurements.

Figure 9 is a block diagram of the user equipment 108 showing various components for implementing embodiments of the present subject matter. In Figure 9, the user equipment 108 includes a processor 902, memory 904, a read only memory (ROM) 906, a transceiver 908, a bus 910, a display 912, an input device 914, and a cursor control 916.

The processor 902, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processor 902 may also include embedded controllers, such as generic or programmable logic devices or arrays, application specific integrated circuits, single-chip computers, smart cards, and the like.

The memory 904 and the ROM 906 may be volatile memory and non-volatile memory. The memory 904 includes executable instructions 918, which when executed by the processor 902, causes the processor 902 to perform method steps according to one or more embodiments described in Figures 3 to 7. A variety of computer-readable storage media may be stored in and accessed from the memory elements. Memory elements may include any suitable memory device(s) for storing data and machine-readable instructions, such as read only memory, random access memory, erasable programmable read only memory, electrically erasable programmable read only memory, hard drive, removable media drive for handling compact disks, digital video disks, diskettes, magnetic tape cartridges, memory cards, and the like.

Embodiments of the present subject matter may be implemented in conjunction with modules, including functions, procedures, data structures, and application programs, for performing tasks, or defining abstract data types or low-level hardware contexts. The executable instructions 918 may be stored on any of the above-mentioned storage media and may be executable by the processor 902. For example, a computer program may include the executable instructions 918, that when executed by the processor 902, cause the processor 902 to perform method steps according to the teachings and herein described embodiments of the present subject matter. In one embodiment, the computer program may be included on a compact disk-read only memory (CD-ROM) and loaded from the CD-ROM to a hard drive in the non-volatile memory.

The bus 910 acts as interconnect between various components of the user equipment 108. The components such as the transceiver 908, the display 912, the input device 914, and the cursor control 916 are well known to the person skilled in the art and hence the explanation is thereof omitted.

## Claims

1. A method for receiving at least one time division duplex, TDD, uplink, UL, downlink, /DL, configuration applicable to at least one frame by a user equipment, UE (108), in a wireless communication system, the method comprising:
receiving, by the UE (108), a system information block, SIB, from a base station, BS (106), the SIB including a first TDD UL/DL configuration;
monitoring, by the UE (108), a physical downlink control channel, PDCCH, transmitted from the BS (106) on at least one DL subframe included in an on duration of a discontinuous reception, DRX, cycle, the at least one DL subframe being indicated in the first TDD UL/DL configuration;
receiving, by the UE (108), information about at least one second TDD UL/DL configuration on the monitored PDCCH; and
applying, by the UE (108), the at least one second TDD UL/DL configuration to the at least one frame based on the received information,
wherein the PDCCH is monitored based on an identifier of the UE (108), and
wherein the on duration is repeated periodically based on periodicity information for monitoring the PDCCH.

2. The method of claim 1, further comprising:
performing one of radio resource management, RRM, measurements, radio link monitoring, RLM, measurements, and channel state information, CSI, measurements during the on duration period.

3. A user equipment, UE (108), in a wireless communication system, the UE (108) comprising:
a transceiver (908) configured to receive a system information block, SIB, from a base station, BS (106), the SIB including a first time division duplex, TDD, uplink, UL, downlink, /DL, configuration; and
a processor (902) configured to:
monitor a physical downlink control channel, PDCCH, transmitted from the BS (106) on at least one DL subframe included in an on duration of a discontinuous reception, DRX, cycle, the at least one DL subframe being indicated in the first TDD UL/DL configuration,
control the transceiver (908) to receive information about at least one second TDD UL/DL configuration on the monitored PDCCH, and
apply the at least one second TDD UL/DL configuration to at least one frame based on the received information,
wherein the PDCCH is monitored based on an identifier of the UE (108), and
wherein the on duration is repeated periodically based on periodicity information for monitoring the PDCCH.

4. The UE (108) of claim 3, wherein the processor (902) is further configured to:
perform one of radio resource management, RRM, measurements, radio link monitoring, RLM, measurements, and channel state information, CSI, measurements during the on duration period.

5. A method for transmitting at least one time division duplex, TDD, uplink, UL, downlink, /DL, configuration applicable to at least one frame by a base station, BS (106), in a wireless communication system, the method comprising:
transmitting, by the BS (106), to a user equipment (108), UE, a system information block, SIB, including a first TDD UL/DL configuration; and
transmitting, by the BS (106), to the UE (108), information about at least one second TDD UL/DL configuration through a physical downlink control channel, PDCCH, on at least one DL subframe,
wherein the at least one DL subframe is included in an on duration of a discontinuous reception, DRX, cycle and is indicated by the first TDD UL/DL configuration,
wherein the at least one second TDD UL/DL configuration is applied to the at least one frame based on the information, and
wherein the PDCCH is monitored based on an identifier of the UE (108), and
wherein the on duration is repeated periodically based on periodicity information for monitoring the PDCCH.

6. The method of claim 5, wherein one of radio resource management, RRM, measurements, radio link monitoring, RLM, measurements, and channel state information, CSI, measurements is performed by the UE (108) during the on duration period.

7. A base station, BS (106), in a wireless communication system, the BS (106) comprising:
a transceiver; and
a processor configured to control the transceiver to:
transmit, to a user equipment, UE (108), a system information block, SIB, including a first time division duplex, TDD, uplink, UL, /downlink, DL, configuration, and
transmit, to the UE (108), information about at least one second TDD UL/DL configuration through a physical downlink control channel, PDCCH, on at least one DL subframe,
wherein the at least one DL subframe is included in an on duration of a discontinuous reception, DRX, cycle and is indicated by the first TDD UL/DL configuration,
wherein the at least one second TDD UL/DL configuration is applied to at least one frame based on the information, and
wherein the PDCCH is monitored based on an identifier of the UE (108) , and
wherein the on duration is repeated periodically based on periodicity information for monitoring the PDCCH.

8. The BS (106) of claim 7, wherein one of radio resource management, RRM, measurements, radio link monitoring, RLM, measurements, and channel state information, CSI, measurements is performed by the UE (108) during the on duration period.

## Patentansprüche

1. Verfahren zum Empfangen von zumindest einer Time-Division-Duplex-, TDD-, Uplink-, UL-, Downlink/DL-Konfiguration, die auf zumindest einen Rahmen durch ein Benutzergerät, UE (108), anwendbar ist, in einem drahtlosen Kommunikationssystem, wobei das Verfahren Folgendes umfasst:
Empfangen, durch das UE (108), eines Systeminformationsblocks, SIB, von einer Basisstation, BS (106), wobei der SIB eine erste TDD-UL-/DL-Konfiguration beinhaltet;
Überwachen, durch das UE (108), eines physischen Downlink-Steuerkanals, PDCCH, der von der BS (106) auf zumindest einem DL-Teilrahmen übertragen wird, der in einer Einschaltdauer eines Zyklus eines diskontinuierlichen Empfangs, DRX, enthalten ist, wobei der zumindest eine DL-Teilrahmen in der ersten TDD-UL-/DL-Konfiguration angegeben ist;
Empfangen, durch das UE (108), von Informationen über zumindest eine zweite TDD-UL-/DL-Konfiguration auf dem überwachten PDCCH; und
Anwenden, durch das UE (108), der zumindest einen zweiten TDD-UL-/DL-Konfiguration auf den zumindest einen Rahmen basierend auf den empfangenen Informationen;
wobei der PDCCH basierend auf einer Kennung des UE (108) überwacht wird, und
wobei die Einschaltdauer basierend auf Periodizitätsinformationen zum Überwachen des PDCCH periodisch wiederholt wird.

2. Verfahren nach Anspruch 1, ferner umfassend:
Durchführen von einem von Messungen zu Funkressourcenverwaltung, RRM, Messungen zu Funkverbindungsüberwachung, RLM, und Messungen zu Kanalzustandsinformationen, CSI, während des Einschaltdauerzeitraums.

3. Benutzergerät, UE (108), in einem drahtlosen Kommunikationssystem, wobei das UE (108) Folgendes umfasst:
einen Sendeempfänger (908), der konfiguriert ist, um einen Systeminformationsblock, SIB, von einer Basisstation, BS (106), zu empfangen, wobei der SIB eine erste Time-Division-Duplex-, TDD-, Uplink-, UL-, Downlink/DL-Konfiguration beinhaltet; und
einen Prozessor (902), der für Folgendes konfiguriert ist:
Überwachen eines physischen Downlink-Steuerkanals, PDCCH, der von der BS (106) auf zumindest einem DL-Teilrahmen übertragen wird, der in einer Einschaltdauer eines Zyklus eines diskontinuierlichen Empfangs, DRX, enthalten ist, wobei der zumindest eine DL-Teilrahmen in der ersten TDD-UL-/DL-Konfiguration angegeben ist,
Steuern des Sendeempfängers (908), um Informationen über zumindest eine zweite TDD-UL-/DL-Konfiguration auf dem überwachten PDCCH zu erhalten, und
Anwenden der zumindest einen zweiten TDD-UL-/DL-Konfiguration auf zumindest einen Rahmen basierend auf den empfangenen Informationen,
wobei der PDCCH basierend auf einer Kennung des UE (108) überwacht wird, und
wobei die Einschaltdauer basierend auf Periodizitätsinformationen zum Überwachen des PDCCH periodisch wiederholt wird.

4. UE (108) nach Anspruch 3, wobei der Prozessor (902) ferner für Folgendes konfiguriert ist:
Durchführen von einem von Messungen zu Funkressourcenverwaltung, RRM, Messungen zu Funkverbindungsüberwachung, RLM, und Messungen zu Kanalzustandsinformationen, CSI, während des Einschaltdauerzeitraums.

5. Verfahren zum Übertragen von zumindest einer Time-Division-Duplex-, TDD-, Uplink-, UL-,Downlink/DL-Konfiguration, die auf zumindest einen Rahmen durch eine Basisstation, BS (106), anwendbar ist, in einem drahtlosen Kommunikationssystem, wobei das Verfahren Folgendes umfasst:
Übertragen, durch die BS (106), an ein Benutzergerät (108), UE, eines Systeminformationsblocks, SIB, der eine erste TDD-UL-/DL-Konfiguration beinhaltet; und
Übertragen, durch das BS (106), an das UE (108), von Informationen über zumindest eine zweite TDD-UL-/DL-Konfiguration über einen physischen Downlink-Steuerkanal, PDCCH, auf zumindest einem DL-Teilrahmen,
wobei der zumindest eine DL-Teilrahmen in einer Einschaltdauer eines Zyklus eines diskontinuierlichen Empfangs, DRX, enthalten ist und durch die erste TDD-UL-/DL-Konfiguration angegeben ist,
wobei die zumindest eine zweite TDD-UL-/DL-Konfiguration auf den zumindest einen Rahmen basierend auf den Informationen angewendet wird, und
wobei der PDCCH basierend auf einer Kennung des UE (108) überwacht wird, und
wobei die Einschaltdauer basierend auf Periodizitätsinformationen zum Überwachen des PDCCH periodisch wiederholt wird.

6. Verfahren nach Anspruch 5, wobei eines von Messungen zu Funkressourcenverwaltung, RRM, Messungen zu Funkverbindungsüberwachung, RLM, und Messungen zu Kanalzustandsinformationen, CSI, durch das UE (108) während des Einschaltdauerzeitraums durchgeführt wird.

7. Basisstation, BS (106), in einem drahtlosen Kommunikationssystem, wobei die BS (106) Folgendes umfasst:
einen Sendeempfänger; und
einen Prozessor, der konfiguriert ist, um den Sendeempfänger für Folgendes zu steuern:
Übertragen, an ein Benutzergerät, UE (108), eines Systeminformationsblocks, SIB, der eine erste Time-Division-Duplex-, TDD-, Uplink-, UL-,/Downlink, DL-Konfiguration beinhaltet, und
Übertragen, an das UE (108), von Informationen über zumindest eine zweite TDD-UL-/DL-Konfiguration über einen physischen Downlink-Steuerkanal, PDCCH, auf zumindest einem DL-Teilrahmen,
wobei der zumindest eine DL-Teilrahmen in einer Einschaltdauer eines Zyklus eines diskontinuierlichen Empfangs, DRX, enthalten ist und durch die erste TDD-UL-/DL-Konfiguration angegeben ist,
wobei die zumindest eine zweite TDD-UL-/DL-Konfiguration auf zumindest einen Rahmen basierend auf den Informationen angewendet wird, und
wobei der PDCCH basierend auf einer Kennung des UE (108) überwacht wird, und
wobei die Einschaltdauer basierend auf Periodizitätsinformationen zum Überwachen des PDCCH periodisch wiederholt wird.

8. BS (106) nach Anspruch 7, wobei eines von Messungen zu Funkressourcenverwaltung, RRM, Messungen zu Funkverbindungsüberwachung, RLM, und Messungen zu Kanalzustandsinformationen, CSI, durch das UE (108) während des Einschaltdauerzeitraums durchgeführt wird.

## Revendications

1. Procédé permettant de recevoir au moins une configuration de liaison montante, UL, liaison descendante, /DL, de duplex à répartition dans le temps, TDD, applicable à au moins une trame par un équipement utilisateur, UE (108), dans un système de communication sans fil, le procédé comprenant :
la réception, par l'UE (108), d'un bloc d'informations système, SIB, en provenance d'une station de base, BS (106), le SIB comprenant une première configuration UL/DL TDD ;
la surveillance, par l'UE (108), d'un canal de commande de liaison descendante physique, PDCCH, transmis depuis la BS (106) sur au moins une sous-trame DL incluse dans une durée d'activation d'un cycle de réception discontinue, DRX, ladite au moins une sous-trame DL étant indiquée dans la première configuration UL/DL TDD ;
la réception, par l'UE (108), d'informations concernant au moins une seconde configuration UL/DL TDD sur le PDCCH surveillé ; et
l'application, par l'UE (108), de ladite au moins une seconde configuration UL/DL TDD à ladite au moins une trame sur la base des informations reçues,
ledit PDCCH étant surveillé sur la base d'un identifiant de l'UE (108), et
ladite durée d'activation étant répétée périodiquement sur la base d'informations de périodicité pour surveiller le PDCCH.

2. Procédé selon la revendication 1, comprenant en outre :
l'exécution de l'une parmi des mesures de gestion de ressources radio, RRM, des mesures de surveillance de liaison radio, RLM, des mesures d'informations d'état de canal, CSI, pendant la période d'activation.

3. Équipement utilisateur, UE (108), dans un système de communication sans fil, l'UE (108) comprenant :
un émetteur-récepteur (908) configuré pour recevoir un bloc d'informations système, SIB, en provenance d'une station de base, BS (106), le SIB incluant une première configuration de liaison montante, UL, liaison descendante, /DL de duplex à répartition dans le temps, TDD ; et
un processeur (902) configuré pour :
surveiller un canal de commande de liaison descendante physique, PDCCH, transmis depuis la BS (106) sur au moins une sous-trame DL incluse dans une durée d'activation d'un cycle de réception discontinue, DRX, ladite au moins une sous-trame DL étant indiquée dans la première configuration UL/DL TDD,
commander l'émetteur-récepteur (908) pour recevoir des informations sur au moins une seconde configuration UL/DL TDD sur le PDCCH surveillé, et
appliquer ladite au moins une seconde configuration UL/DL TDD à au moins une trame sur la base des informations reçues,
ledit PDCCH étant surveillé sur la base d'un identifiant de l'UE (108), et
ladite durée d'activation étant répétée périodiquement sur la base d'informations de périodicité pour surveiller le PDCCH.

4. UE (108) selon la revendication 3, ledit processeur (902) étant en outre configuré pour :
effectuer l'une parmi des mesures de gestion de ressources radio, RRM, des mesures de surveillance de liaison radio, RLM, et des mesures d'informations d'état de canal, CSI, pendant la période d'activation.

5. Procédé permettant de transmettre au moins une configuration de liaison montante, UL, liaison descendante, /DL, de duplex à répartition dans le temps, TDD, applicable à au moins une trame par une station de base, BS (106), dans un système de communication sans fil, le procédé comprenant :
la transmission, par la BS (106), à un équipement utilisateur (108), UE, d'un bloc d'informations système, SIB, incluant une première configuration UL/DL TDD ; et
la transmission, par la BS (106), à l'UE (108), d'informations sur au moins une seconde configuration UL/DL TDD par l'intermédiaire d'un canal de commande de liaison descendante physique, PDCCH, sur au moins une sous-trame DL,
ladite au moins une sous-trame DL étant incluse dans une durée d'activation d'un cycle de réception discontinue, DRX, et étant indiquée par la première configuration UL/DL TDD,
ladite au moins une seconde configuration UL/DL TDD étant appliquée à ladite au moins une trame sur la base des informations, et
ledit PDCCH étant surveillé sur la base d'un identifiant de l'UE (108), et
ladite durée d'activation étant répétée périodiquement sur la base d'informations de périodicité pour surveiller le PDCCH.

6. Procédé selon la revendication 5, l'une parmi des mesures de gestion de ressources radio, RRM, des mesures de surveillance de liaison radio, RLM, des mesures d'informations d'état de canal, CSI, étant effectuée par l'UE (108) pendant la période d'activation.

7. Station de base, BS (106), dans un système de communication sans fil, la BS (106) comprenant :
un émetteur-récepteur ; et
un processeur configuré pour commander à l'émetteur-récepteur de :
transmettre, à un équipement utilisateur, UE (108), un bloc d'informations système, SIB, incluant une première configuration de liaison montante, UL, /liaison descendante, DL de duplex à répartition dans le temps, TDD, et
transmettre, à l'UE (108), des informations sur au moins une seconde configuration UL/DL TDD par l'intermédiaire d'un canal de commande de liaison descendante physique, PDCCH, sur au moins une sous-trame DL,
ladite au moins une sous-trame DL étant incluse dans une durée d'activation d'un cycle de réception discontinue, DRX, et étant indiquée par la première configuration UL/DL TDD,
ladite au moins une seconde configuration UL/DL TDD étant appliquée à au moins une trame sur la base des informations, et
ledit PDCCH étant surveillé sur la base d'un identifiant de l'UE (108), et
ladite durée d'activation étant répétée périodiquement sur la base d'informations de périodicité pour surveiller le PDCCH.

8. BS (106) selon la revendication 7, l'une parmi des mesures de gestion de ressources radio, RRM, des mesures de surveillance de liaison radio, RLM, des mesures d'informations d'état de canal, CSI, étant effectuée par l'UE (108) pendant la période de la durée d'activation.
